# FASCICULE DE BREVET EUROPEEN

(11) **EP 1 965 111 B1**
(45) Date de publication et mention de la délivrance du brevet: **16.02.2011**
(21) Numéro de dépôt: 08290180.2
(22) Date de dépôt: 26.02.2008
(51) Int. Cl.: F16K 21/12, E03D 3/04

(54) **Robinet temporisé à déclenchement souple**
Selbstschlussarmatur
Self-closing valve

(30) Priorité: 27.02.2007 FR 0701404
(43) Date de publication de la demande: 03.09.2008
(73) Titulaire: Delabie, 80534 Friville Cedex (FR)
(72) Inventeur: Delabie, Gérard, 80960 St. Blimont (FR); Thomas, Dominique, 80130 Allenay (FR)
(74) Mandataire: Hammond, William

(56) Documents cités:
- EP-A- 0 838 619
- EP-A2- 0 264 638
- FR-A1- 2 472 709
- US-A- 1 637 825
- US-A- 2 453 450

## Description

La présente invention concerne un robinet temporisé à déclenchement souple.

On connaît des robinets commandés par un poussoir comportant une chambre de temporisation avec un clapet de décompression tel que celui décrit dans le document EP-264638-A. Mais ces dispositifs de l'art antérieur présentent quelques inconvénients comme par exemple le fait que la temporisation varie fortement selon la pression du réseau. De plus, la construction même du mécanisme de ces robinets conduit par la présence de canaux latéraux à un corps de robinet relativement volumineux et donc coûteux.

Aussi un des buts de la présente invention est-il de fournir un robinet temporisé à déclenchement souple qui permet d'obvier les inconvénients ci-dessus.

Un autre but est de fournir un tel robinet qui permet un passage direct du fluide de l'amont vers l'aval dans le corps du robinet.

Ces buts, ainsi que d'autres qui apparaîtront par la suite sont atteints par un robinet pour fluide, par exemple pour délivrer de l'eau à des appareils sanitaires, du genre comprenant un bouton poussoir pour actionner l'ouverture et une chambre de temporisation dans laquelle coulisse un piston qui porte le clapet principal du robinet, le retour du clapet sur son siège étant provoqué par un ressort et étant ralenti par un joint racleur disposé entre le piston et la paroi interne de la chambre de temporisation, à l'intérieur du corps de tête une tige de commande coulissant axialement dans le dit corps de tête dont la partie inférieure est le siège auxiliaire du robinet, l'extrémité inférieure de la tige de commande portant le clapet auxiliaire, un canal radial de décompression étant ménagé dans le corps de tête en aval du siège auxiliaire pour permettre un écoulement libre du fluide vers l'orifice de sortie du robinet lorsque le clapet auxiliaire est ouvert, lequel robinet étant caractérisé, selon la présente invention, par le fait qu' un ou plusieurs canaux radiaux sont ménagés en-dessous de la chambre de temporisation et en aval du siège principal du robinet de manière à permettre la sortie du fluide, l'orifice de sortie de chaque canal radial étant obturé par un limiteur de débit de manière à maintenir une contre-pression en amont du siège principal provoquant ainsi une remontée maximale du piston dans la chambre de temporisation même en cas de faible pression.

De préférence, la cartouche monobloc comprend un corps de tête rendu solidaire du corps de robinet par un filetage et une collerette, la partie inférieure du corps de tête comportant une jupe qui reçoit un pot de temporisation dont la partie opposée est solidaire d'un système déviateur qui comporte un ou plusieurs canaux périphériques destinés à permettre l'écoulement du fluide depuis le canal amont du robinet vers la partie inférieure de la chambre de temporisation dans laquelle est située le siège principal, un puits axial prolongeant le siège principal pour permettre au fluide de s'écouler vers l'intérieur du système déviateur parallèlement auxdits canaux périphériques et un ou des orifices radiaux étant ménagés en dessous de la partie inférieure de la chambre de temporisation de manière à permettre au fluide de s'écouler librement depuis le puits axial vers l'orifice de sortie du robinet lorsque le siège principal du robinet est ouvert.

Avantageusement, l'extrémité supérieure de la tige de commande coopérant avec un insert rendu solidaire d'un bouton poussoir par une vis radiale, la partie inférieure de cet insert comportant une cannelure mâle qui coulisse dans une cannelure femelle ménagée dans la partie supérieure du corps de tête, le bouton se trouvant ainsi immobilisé en rotation, un ressort étant disposé sous l'insert pour refermer automatiquement le clapet auxiliaire dès que cesse la force d'appui sur le bouton.

Selon un mode de réalisation préféré de la présente invention, le robinet comprend une grille filtre à l'entrée du ou des canaux d'arrivée du fluide et une bague tubulaire disposée à la périphérie de la partie inférieure du pot de temporisation en regard du ou des orifices radiaux de sortie du fluide, cette bague comportant des créneaux de différentes tailles ménagés à l'extrémité supérieure de cette bague pour permettre de limiter le débit du fluide et des cannelures intérieures s'ajustant sur des cannelures extérieures ménagées à la partie basse de l'ensemble déviateur / pot de temporisation.

Selon une variante de réalisation, un limiteur automatique constitué d'une douille cannelée en un matériau plastique et d'un joint en élastomère est inséré dans le déviateur en regard du canal radial de sortie du fluide, ce limiteur étant maintenu en place par une bague enserrant l'embase de la cartouche monobloc, cette bague étant maintenue en translation par tout moyen connu tel que clipsage, agrafage ou joint élastomère disposé dans un gorge ménagée dans la partie inférieure du déviateur.

Avantageusement, ce robinet comprend une gorge dans la partie inférieure du mécanisme monobloc et un joint torique disposé dans cette gorge pour assurer l'étanchéité entre la partie inférieure de l'ensemble déviateur / pot de temporisation et le fond du robinet, ce joint permettant en outre de retenir en translation la bague tubulaire de réglage de débit.

La description qui va suivre et qui ne présente aucun caractère limitatif, doit être lue en regard des figures annexées, parmi lesquelles :

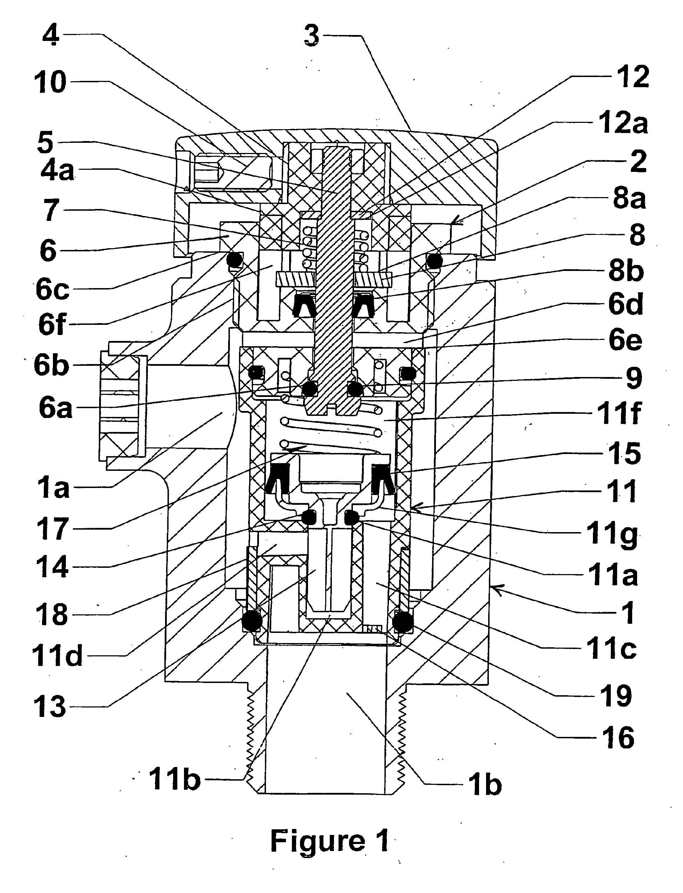

- la figure 1 est une vue en coupe longitudinale d'un robinet selon la présente invention en position fermée ;

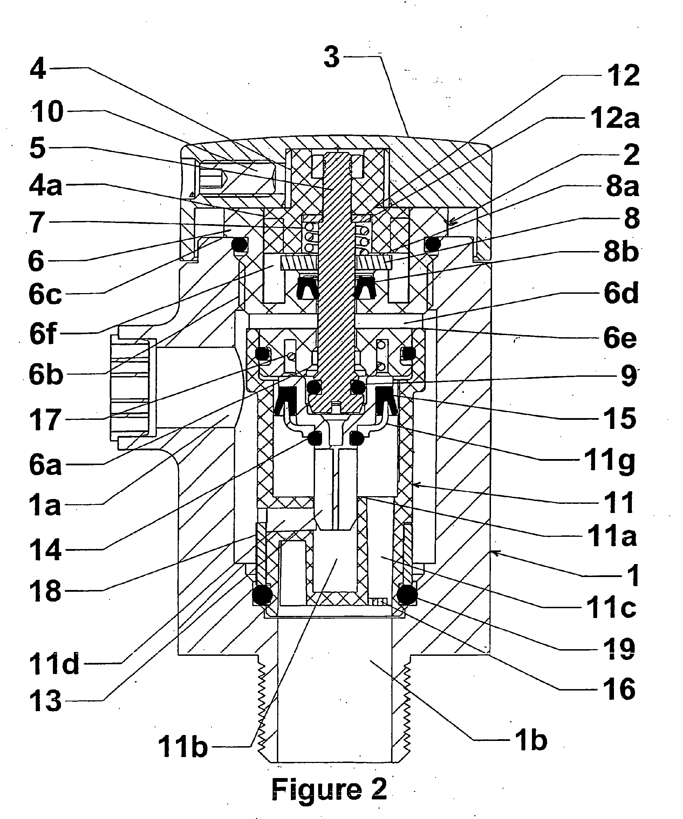

- la figure 2 est une vue en coupe longitudinale du robinet selon la figure 1 en position ouverte ;

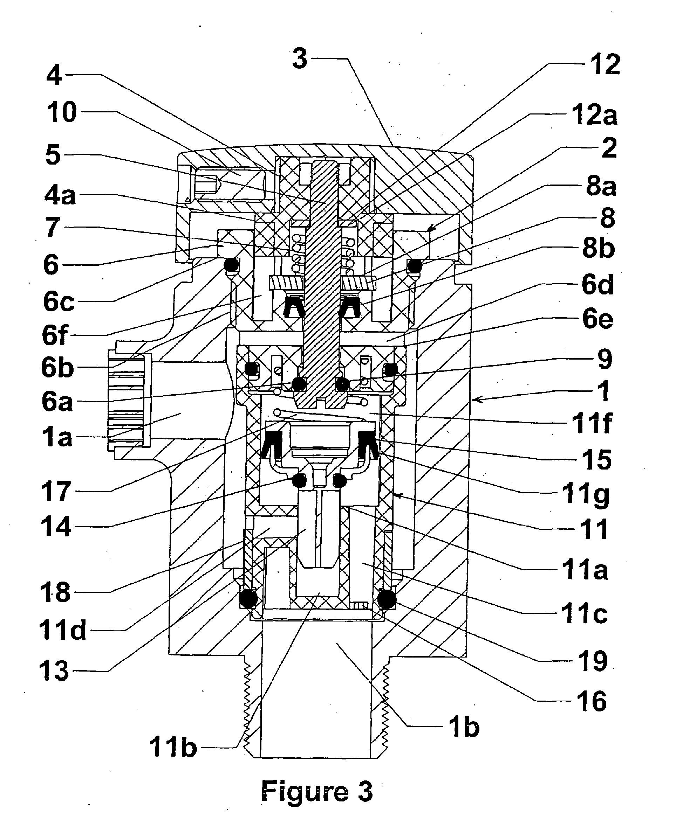

- la figure 3 est une vue en coupe longitudinale du robinet selon la figure 2 lorsque aucune action n'est plus exercée pour le maintenir ouvert.
- la figure 4a est une vue en perspective de trois quart arrière d'un pot de temporisation inclut dans le robinet selon la figure 1 ;
- la figure 4b est vue en perspective de dessus du pot de temporisation selon la figure 4a ;
- la figure 4c est une vue latérale du pot de temporisation selon la figure 4a ;
- la figure 5 est une vue en perspective d'une bague coopérant avec le pot de temporisation selon les figures 4a à 4c ; et,
- la figure 6 est une vue en coupe longitudinale du robinet selon la figure 1 comprenant un limiteur automatique de débit.

Afin de donner un sens à des termes ou expressions tels que « haut », « bas », « supérieur », « inférieur », le robinet objet de la présente invention sera décrit par rapport à ces figures tel qu'orienté sur celles-ci : le bouton poussoir étant en haut.

Ainsi qu'on peut le voir sur ces figures, un robinet temporisé comprend de manière connue un corps de robinet 1 de forme générale cylindrique et un dispositif sous forme d'une cartouche monobloc, désignée dans son ensemble par la référence 2, avec un corps de tête 6 qui est vissé dans ce corps de robinet 1. Ce corps de robinet 1 comporte à sa partie inférieure un canal amont 1b, par lequel arrive le fluide dans le robinet, et un orifice de sortie 1a qui est ménagée dans sa paroi latérale et par lequel s'échappe le fluide lorsque le robinet est ouvert.

Le dispositif 2 comprend un bouton poussoir 3 qui est solidaire d'un insert 4 avec lequel coopère axialement une tige de commande 5. Selon le présent exemple de réalisation, l'insert 4 est rendu solidaire du bouton poussoir 3 par une vis radiale 10 et comprend une cavité axiale borgne qui est ouverte à sa partie inférieure et comporte dans son fond une première rondelle 12 traversée par la tige de commande 5. La partie inférieure de l'insert 4 comporte une cannelure mâle 4a qui coulisse dans une cannelure femelle 6f ménagée dans la partie supérieure d'un corps de tête 6 lui-même rendu solidaire du corps de robinet 1 par un filetage 6b et une collerette 6c: le bouton poussoir 3 est ainsi immobilisé en rotation.

La tige de commande 5 coulisse axialement dans le corps de tête 6 dont la partie inférieure 6a constitue le siège auxiliaire du robinet. Un premier ressort de rappel 7 est disposé de façon connue autour de la tige de commande 5 entre la face supérieure 8a d'une seconde rondelle 8 et la face inférieure 12a de la première rondelle 12. La seconde rondelle 8 est appliquée contre un épaulement intérieur du corps de tête 6, de façon à rendre prisonnier un joint 8b qui assure l'étanchéité entre la tige de commande 5 et le corps de tête 6. L'extrémité de la tige de commande 5 porte un clapet auxiliaire 9, constitué, par exemple, par un joint torique.

Sous l'effet alterné d'une poussée sur le bouton poussoir 3 et du premier ressort de rappel 7, le clapet auxiliaire 9 est ouvert puis se referme automatiquement dès que cesse la poussée.

De manière connue, un canal radial 6d est ménagé dans le corps de tête 6 en aval du siège auxiliaire 6a pour permettre un écoulement de fluide, lorsque le clapet auxiliaire 9 est ouvert, vers l'orifice de sortie 1a du robinet 1.

La partie inférieure du corps de tête 6 comporte une jupe 6e qui reçoit un pot de temporisation 11 dont la partie opposée à cette jupe comporte un système déviateur comprenant au moins un canal périphérique 11 c destiné à permettre l'arrivée du fluide depuis le canal amont 1b du robinet 1 vers l'intérieur du pot de temporisation 11, ainsi que le siège principal 11a du robinet 1 qui est situé dans le pot de temporisation 11.

A l'intérieur du déviateur, un puits axial 11 b prolonge le siège principal 11a, et au moins un orifice radial 11d est ménagé en-dessous de la chambre de temporisation 11 de manière à permettre au fluide de s'écouler librement, c'est à dire sans frein à l'écoulement du fluide vers l'extérieur, du puits axial 11b vers l'orifice de sortie 1 a du robinet 1, lorsque le siège principal 11 a est ouvert.

De manière connue, à l'intérieur du pot de temporisation 11 est disposé un piston 13 muni d'un joint torique 14 faisant office de clapet principal : ce piston 13 comporte des ailettes qui coopèrent avec la paroi interne du puits axial 11 b afin d'en faciliter la coulissement axial dans celui-ci. Un joint à lèvres 15 est disposé sur ce piston 13 pour assurer l'étanchéité entre le piston 13 et la paroi interne du pot de temporisation 11.

Lorsque le clapet auxiliaire 9 est ouvert sous l'action du bouton poussoir 3, le piston 13 se trouve être poussé vers le haut par la pression du fluide présent dans la chambre inférieure 11g du pot de temporisation 11. Un ressort de compression 17 est placé dans la chambre supérieure 11 f du pot de temporisation 11, entre la face inférieure du corps de tête 6 et la face supérieure du piston 13 afin d'assurer le retour de ce piston 13 vers le bas lorsque l'on relâche l'appui sur le bouton poussoir 3 et qu'en conséquence le clapet auxiliaire 9 se ferme.

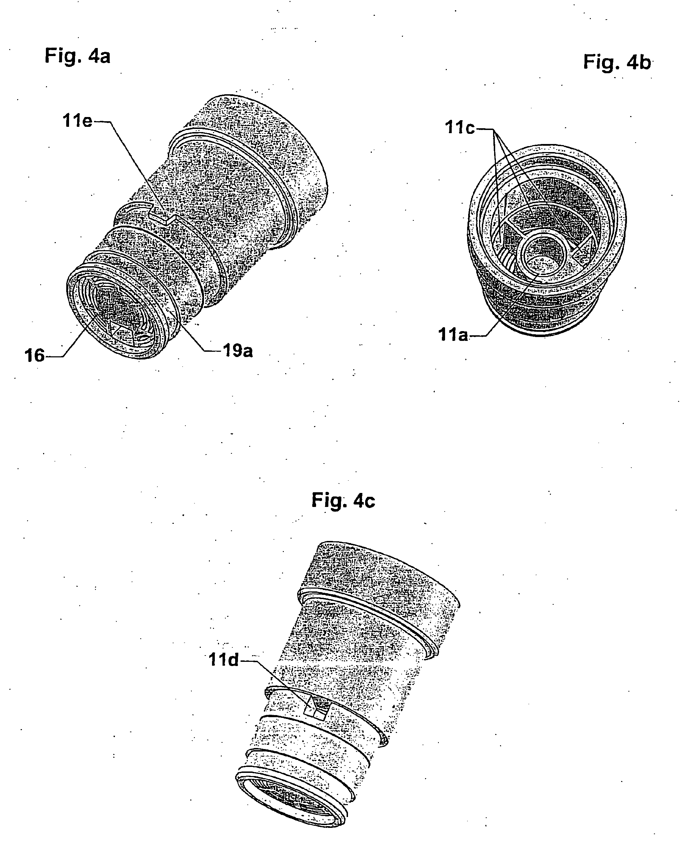

L'ensemble constitué par le système déviateur et le pot de temporisation 11 comprend, comme représenté à la figure 4a, une grille filtre 16 à l'entrée de chaque canal 11 c d'arrivée du fluide pour arrêter toute particule susceptible d'entraver la fermeture correcte des clapets auxiliaire 9 et principal 14. Ainsi, se trouvent réunis en une seule et même pièce les fonctions de pot de temporisation, de siège principal du robinet, de canal d'admission du fluide, de filtre, et de canal de sortie du fluide.

Avantageusement, à la périphérie de la partie inférieure du pot de temporisation 11 et en regard de chaque orifice radial 11 d est disposé un système de limitation de débit de manière à maintenir une pression suffisante dans la chambre inférieure 11g du pot de temporisation 11 pour que le piston 13 se soulève complètement même en cas de faible pression. Ceci a notamment pour avantage d'obtenir un volume d'eau délivrée quasi-constant à chaque cycle quelle que soit la pression. Un tel dispositif de limitation de débit de fluide disposé en aval du siège 11a du robinet a pour avantage de maintenir une pression suffisante sous le clapet 14, ce qui provoque une remontée complète du piston 13 même en cas de faible pression du réseau et, par conséquent, une temporisation constante quelles que soient les variations de pression du fait que le canal radial de décompression 6d reste libre.

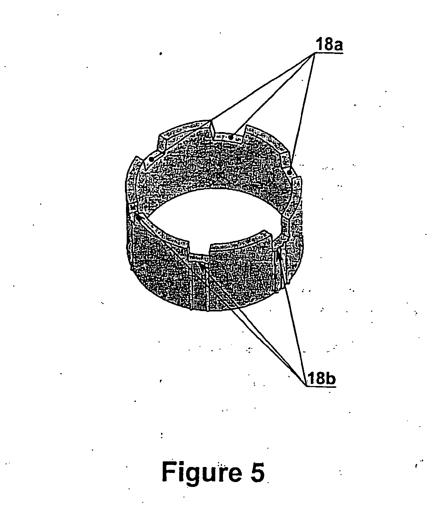

Le système de limitation de débit est, dans le présent exemple de réalisation, une bague tubulaire 18 qui permet d'obturer plus ou moins chacun de ces orifices radiaux 11d. A la figure 5 est représentée une telle bague 18 de réglage de débit comportant des cannelures intérieures 18a coopérant avec des cannelures extérieures 11e ménagées à l'extérieur et en partie basse de l'ensemble système déviateur/pot de temporisation 11. Des créneaux 18b de tailles différentes sont ménagés à l'extrémité supérieure de la bague de réglage 18 : ils permettent de limiter le débit du fluide en fonction des besoins d'un utilisateur.

Cette bague 18 peut être retenue en translation sur le déviateur par un joint torique 19 qui a aussi pour fonction d'assurer l'étanchéité entre la partie inférieure de l'ensemble système déviateur /pot de temporisation 11 et le fond du robinet 1.

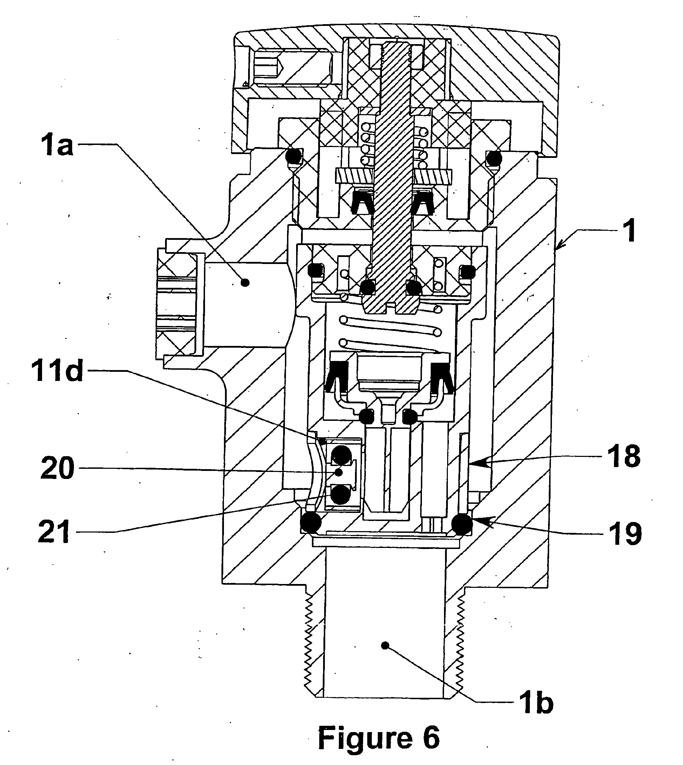

Selon un autre mode de réalisation représenté à la figure 6, le système de limitation de débit est disposé à chaque orifice radial 11d. Il est constitué d'une douille cannelée 20 en un matériau plastique et d'un joint 21 en élastomère qui est inséré dans le déviateur en regard du canal radial 11d de sortie du fluide. Ce limiteur est maintenu en place par une bague 18 qui enserre l'embase de la cartouche monobloc 2 et qui est maintenue en translation par tout moyen connu tel qu'agrafage, clipsage, ou par un joint torique 19 disposé dans une gorge 19a ménagée dans la partie inférieure du déviateur.

## Revendications

1. Robinet temporisé à déclenchement souple pour fluide, par exemple pour délivrer de l'eau à des appareils sanitaires, le robinet comprenant un mécanisme sous forme d'une cartouche monobloc (2) comprenant en outre un corps de tête (6), le mécanisme étant vissé dans le corps dudit robinet, comportant un bouton poussoir (3) pour actionner l'ouverture et une chambre de temporisation (11f) dans laquelle coulisse un piston qui porte le clapet principal du robinet, le retour du clapet principal sur son siège étant provoqué par un ressort et étant ralenti par un joint à lèvres (15) disposé entre le piston (13) et la paroi interne de la chambre de temporisation, à l'intérieur du corps de tête (6) une tige de commande de décompression (5) coulissant axialement dans ledit corps de tête (6), dont la partie inférieure (6a) est le siège auxiliaire du robinet, l'extrémité inférieure de la tige de commande de décompression (5) portant le clapet auxiliaire (9), un canal radial de décompression (6d) étant ménagé dans le corps de tête (6) en aval du siège auxiliaire (6a) pour permettre un écoulement libre du fluide vers l'orifice de sortie (1a) du robinet lorsque le clapet auxiliaire (9) est ouvert, **caractérisé par le fait qu'**un ou plusieurs canaux radiaux (11d) sont ménagés en-dessous de la chambre de temporisation (11f) et en aval du siège principal (11a), de manière à permettre la sortie du fluide, l'orifice de sortie de chaque canal radial (11d) étant obturé par un limiteur de débit (20, 21) de manière à maintenir une contre-pression en amont dudit siège principal (11a) provoquant ainsi une remontée maximale dudit piston (13) dans ladite chambre de temporisation (11f) même en cas de faible pression.

2. Robinet selon la revendication 1, **caractérisé par le fait que** la cartouche monobloc comprend un corps de tête (6) rendu solidaire du corps de robinet (1) par un filetage (6b) et une collerette (6c), la partie inférieure du corps de tête (6) comportant une jupe (6e) qui reçoit un pot de temporisation (11) dont la partie opposée est solidaire d'un système déviateur qui comporte un ou plusieurs canaux périphériques (11c) destinés à permettre l'écoulement du fluide depuis le canal amont (1b) dudit robinet vers la partie inférieure (11g) de la chambre de temporisation dans laquelle est située ledit siège principal (11 a), un puits axial (11b) prolongeant ledit siège principal pour permettre au fluide de s'écouler vers l'intérieur dudit système déviateur parallèlement auxdits canaux périphériques (11c) et le ou lesdits canaux radiaux (11 d) étant ménagés en dessous de la partie inférieure (11g) de la chambre de temporisation de manière à permettre au fluide de s'écouler librement depuis ledit puits axial (11b) vers l'orifice de sortie (1a) du robinet lorsque le siège principal (11a) du robinet est ouvert.

3. Robinet selon la revendication 1, **caractérisé par le fait que** l'extrémité supérieure de la tige de commande de décompression (5) coopère avec un insert (4) rendu solidaire du bouton poussoir (3) par une vis radiale (10), la partie inférieure dudit insert (4) comportant une cannelure mâle (4a) qui coulisse dans une cannelure femelle (6f) ménagée dans la partie supérieure du corps de tête (6), le bouton (3) se trouvant ainsi immobilisé en rotation, un ressort (7) étant disposé sous ledit insert (4) pour refermer automatiquement le clapet auxiliaire (9) dès que cesse la force d'appui sur le bouton (3).

4. Robinet selon la revendication 2, **caractérisé par le fait qu'**il comprend une grille filtre (16) à l'entrée du ou des canaux périphériques (11c) d'arrivée du fluide et une bague tubulaire (18) disposée à la périphérie de la partie inférieure du pot de temporisation (11) en regard du ou des canaux radiaux (11d) de sortie du fluide, ladite bague (18) comportant des créneaux (18b) de différentes tailles ménagés à l'extrémité supérieure de la dite bague (18) pour permettre de limiter le débit du fluide et des cannelures intérieures (18a) s'ajustant sur des cannelures extérieures (11e) ménagées à la partie basse de l'ensemble déviateur / pot de temporisation.

5. Robinet selon l'une quelconque des revendications 1 à 3, **caractérisé par le fait qu'**il comprend un limiteur automatique constitué d'une douille (20) cannelée en un matériau plastique et d'un joint (21) en élastomère qui est inséré dans le déviateur en regard du canal radial (11d) de sortie du fluide, ledit limiteur étant maintenu en place par une bague (18) enserrant l'embase de la cartouche monobloc (2), ladite bague (18) étant maintenue en translation par tout moyen connu tel que clipsage, agrafage ou joint torique disposé dans une gorge ménagée dans la partie inférieure dudit déviateur.

6. Robinet selon l'une quelconque des revendications 4 ou 5, **caractérisé par le fait qu'**il comprend une gorge (19a) dans la partie inférieure du mécanisme monobloc et un joint torique (19) disposé dans ladite gorge pour assurer l'étanchéité entre la partie inférieure de l'ensemble déviateur / pot de temporisation et le robinet, ledit joint (19) permettant en outre de retenir en translation la bague tubulaire (18) de réglage de débit.

## Claims

1. A flexible release delayed valve for fluid, for example to deliver water to sanitary appliances, the valve comprising a mechanism in the form of a single-piece cartridge (2) further comprising a head body (6), the mechanism being screwed into the body of said valve, comprising a push button (3) to actuate opening and a delaying chamber (11f) in which slides a piston which carries the main flap of the valve, the return of the main flap to its seat being caused by a spring and being slowed down by a wiper ring (15) arranged between the piston (13) and the inner wall of the delaying chamber, inside the head body (6) a pressure relief control rod (5) sliding axially in said head body (6), of which the lower portion (6a) is the auxiliary seat of the valve, the lower end of the pressure relief control rod (5) carrying the auxiliary flap (9), a radial pressure relief channel (6d) being arranged in the head body (6) downstream of the auxiliary seat (6a) to allow the fluid to flow freely to the outlet orifice (1 a) of the valve when the auxiliary flap (9) is open, **characterised in that** one or more radial channels (11d) are arranged beneath the delaying chamber (11f) and downstream of the main seat (11 a), to allow the fluid to flow out, the outlet orifice of each radial channel (11d) being closed by a flow regulator (20, 21) to maintain a counter pressure upstream of said main seat (11 a) thus causing a maximum upward movement of said piston (13) in said delaying chamber (11f) even if the pressure is low.

2. A valve according to claim 1, **characterised in that** the single-piece cartridge comprises a head body (6) made integral with the valve body (1) by threading (6b) and a flange (6c), the lower portion of the head body (6) comprising a skirt (6e) which receives a delaying vessel (11) of which the opposite portion is integral with a deflector system which comprises one or more peripheral channels (11 c) designed to allow the fluid to flow from the upstream channel (1b) of said valve to the lower portion (11g) of the delaying chamber in which said main seat (11a) is situated, an axial well (11 b) extending said main seat to allow the fluid to flow into said deflector system parallel to said peripheral channels (11c) and said radial orifice or radial orifices (11d) being arranged beneath the lower portion (11g) of the delaying chamber to allow the fluid to flow freely from said axial well (11 b) to the outlet orifice (1 a) of the valve when the main seat (11 a) of the valve is open.

3. A valve according to claim 1, **characterised in that** the upper end of the pressure relief control rod (5) cooperates with an insert (4) made integral with the push button (3) by a radial screw (10), the lower portion of said insert (4) comprising male fluting (4a) which slides in female fluting (6f) arranged in the upper portion of the head body (6), the button (3) being thus immobilised in rotation, a spring (7) being arranged beneath said insert (4) to automatically close the auxiliary flap (9) once the pressure applied to the button (3) ceases.

4. A valve according to claim 2, **characterised in that** it comprises a filter grille (16) at the inlet of the fluid inlet channel(s) (11c) and a tubular ring (18) arranged at the periphery of the lower portion of the delaying vessel (11) facing the radial fluid outlet orifice(s) (11d), said ring (18) comprising notches (18b) of different sizes arranged at the upper end of said ring (18) to regulate the fluid flow and inner fluting (18a) fitting onto outer fluting (11e) arranged at the lower portion of the deflector / delaying vessel assembly.

5. A valve according to any one of claims 1 to 3, **characterised in that** it comprises an automatic regulator comprising a fluted bush (20) made of a plastics material and an elastomer seal (21) which is inserted in the deflector facing the radial fluid outlet channel (11d), said regulator being held in place by a ring (18) gripping the base of the single-piece cartridge (2), said ring (18) being held in translation by any known means such as clipping, stapling or an O-ring arranged in a recess provided in the lower portion of said deflector.

6. A valve according to claim 4 or claim 5, **characterised in that** it comprises a recess (19a) in the lower portion of the single-piece mechanism and an O-ring (19) arranged in said recess to provide a seal between the lower portion of the deflector / delaying vessel assembly and the valve, said O-ring (19) also holding the tubular flow regulator ring (18) in translation.

## Patentansprüche

1. Selbstschlussarmatur mit weich schließendem Ventil für Flüssigkeiten, z. B. zum Einleiten von Wasser in Sanitärgeräte, wobei die Armatur einen Mechanismus in Form einer Kartusche in Blockkonstruktion (2) sowie einen Oberteilkörper (6) umfasst und der Mechanismus in den Korpus dieser Armatur eingeschraubt ist, die einen Drucktaster (3) zur Betätigung der Öffnung und eine Kammer zur Laufzeiteinstellung (11f) beinhaltet, in der ein Kolben gleitet, der das Hauptventil der Armatur trägt, dessen Rückschlag auf den Ventilsitz durch eine Feder ausgelöst und durch eine Lippendichtung (15) abgebremst wird, die zwischen dem Kolben (13) und der Innenwand der Kammer für die Laufzeiteinstellung angeordnet ist; außerdem befindet sich im Inneren des Oberteilkörpers (6) eine Stange zur Steuerung der Druckentlastung (5), die axial im o. g. Oberteilkörper (6) gleitet, dessen Unterteil (6a) der hilfsweise Sitz der Armatur ist, wobei das untere Ende der Stange zur Steuerung der Druckentlastung (5) das Hilfsventil (9) trägt und nach dem Hilfssitz (6a) ein radialer Druckentlastungskanal (6d) in den Oberteilkörper (6) eingelassen ist, über den die Flüssigkeit ungehindert zur Auslassöffnung (1a) der Armatur fließen kann, wenn das Hilfsventil (9) geöffnet ist; **dadurch gekennzeichnet, dass** unterhalb der Kammer zur Laufzeiteinstellung (11f) und vor dem Hauptsitz (11a) einer oder mehrere radiale Kanäle (11d) ausgespart sind, so dass die Flüssigkeit herausfließen kann, wobei die Austrittsöffnung jedes einzelnen radialen Kanals (11d) durch einen Durchflussbegrenzer (20, 21) verschlossen wird, um so vor dem o. g. Hauptsitz (11a) einen Gegendruck aufrecht zu erhalten, der dazu führt, dass der o. g. Kolben (13) selbst bei geringem Druck in der Kammer zur Laufzeiteinstellung (11f) bis in die oberste Position hochfährt.

2. Armatur nach Anspruch 1, **dadurch gekennzeichnet, dass** die Kartusche in Blockkonstruktion einen Oberteilkörper (6) umfasst, der über ein Gewinde (6b) und einen Flansch (6c) fest mit dem Armaturenkorpus (1) verbunden ist, wobei das Unterteil des Oberteilkörpers (6) eine Schürze (6e) umfasst, in die ein Timerkästchen (11) eingesetzt wird, wobei das andere Ende fest mit einem Umleitungssystem verbunden ist, das einen oder mehrere außen liegende Kanäle (11c) umfasst, über den/die die Flüssigkeit vom Kanal vor der Armatur (1b) in den unteren Teil (11g) der Kammer zur Laufzeiteinstellung fließen kann, in der sich der Hauptsitz (11a) befindet, den ein axialer Schacht (11b) so verlängert, dass die Flüssigkeit parallel zu diesen außen liegenden Kanälen (11c) ins Innere dieses Umleitungssystems fließen kann, und der bzw. die radialen Kanäle (11d) sind so unterhalb des Unterteils (11g) der Kammer für die Laufzeiteinstellung ausgespart, dass die Flüssigkeit ungehindert vom o. g. axialen Schacht (11b) zur Austrittsöffnung (1a) der Armatur fließen kann, wenn der Hauptsitz (11a) der Armatur geöffnet ist.

3. Armatur nach Anspruch 1, **dadurch gekennzeichnet, dass** das obere Ende der Stange zur Steuerung der Druckentlastung (5) mit einem Einsatz (4) zusammenwirkt, der über eine radiale Schraube (10) fest mit dem Drucktaster (3) verbunden ist, wobei der untere Teil dieses Einsatzes (4) einen Wulst (4a) umfasst, der in einer Rille (6f) gleitet, die im Oberteil des Oberteilkörpers (6) ausgespart ist, so dass der Taster (3) nicht weiter verdreht werden kann, wobei unter diesem Einsatz (4) eine Feder (7) angeordnet ist, die das Hilfsventil (9) automatisch wieder schließt, sobald kein Druck mehr auf den Taster (3) ausgeübt wird.

4. Armatur nach Anspruch 2, **dadurch gekennzeichnet, dass** sie ein Sieb (16) umfasst, das am Eintritt der oder des außen liegenden Kanals/Kanäle (11c) angeordnet ist, über den/die die Flüssigkeit hineinfließt, sowie außerdem einen Rohrring (18), der an der Außenlinie des Unterteils des Timerkästchens (11) mit Einblick in den oder die radialen Kanäle (11d) angeordnet ist, aus dem/denen die Flüssigkeit herausfließt, wobei dieser Ring (18) unterschiedlich große Zacken (18b) umfasst, die am oberen Ende dieses Rings (18) ausgespart sind, so dass die durchfließende Flüssigkeit begrenzt werden kann, weiterhin umfasst er innenliegende Rillen (18a), die in die außenliegenden Rillen (11e) passen, die im unteren Teil des Bausteins aus Abzweigleitung und Timerkästchen ausgespart sind.

5. Armatur nach einem beliebigen der Ansprüche 1 bis 3, **dadurch gekennzeichnet, dass** sie einen automatischen Durchflussbegrenzer umfasst, der aus einer geriffelten Hülse (20) aus einem Kunststoff und aus einer Elastomerdichtung (21) besteht, die in die abzweigende Leitung mit Blick auf den radialen Kanal (11d) eingesetzt wird, aus dem die Flüssigkeit herausfließt, wobei dieser Begrenzer von einem Ring (18) gehalten wird, der das Ansatzstück der Kartusche in Blockkonstruktion (2) umschließt; dieser Ring (18) wird durch ein beliebiges bekanntes Mittel wie Clips, Klammern oder einen Runddichtring verschiebbar gehalten, welches in einer Auskehlung angeordnet ist, die im unteren Teil dieser abzweigenden Leitung ausgespart wurde.

6. Armatur nach einem beliebigen der Ansprüche 4 oder 5, **dadurch gekennzeichnet, dass** sie im unteren Teil des Mechanismus in Blockkonstruktion eine Auskehlung (19a) umfasst, in der ein Runddichtring (19) angeordnet ist, mit dem die Dichtheit zwischen dem unteren Teil des Bauteils aus abzweigender Leitung/Timerkästchen und der Armatur gewährleistet ist, wobei diese Dichtung (19) auch dazu dient, den Rohrring (18) zur Durchflussregelung in der Verschiebung zu halten.
